# EUROPEAN PATENT APPLICATION

(11) **EP 2 200 332 A1**
(43) Date of publication of application: **23.06.2010**
(21) Application number: 08105999.0
(22) Date of filing: 17.12.2008
(51) Int. Cl.: H04N 13/04

(54) **Autostereoscopic display**

(71) Applicant: Robert Bosch GmbH, 70442 Stuttgart (DE)
(72) Inventor: Thominet, Vincent, 5330 Bad Zurzach (CH)

(57) **Abstract**

An autostereoscopic display (1), in particular an autostereoscopic head-up display, is disclosed, comprising a pane (2), which is partly reflective and partly transmissive and a light source (3) for generation of an image consisting of a plurality of pixels (5,5a,5b), wherein for each pixel (5,5a,5b) a left/right light beam (6a,6b) is guided from the light source (3) to the left/right eye of the viewer via the pane (2). According to the invention, said guiding of the light beams (6a,6b) to the eyes is achieved only by pure reflection at said pane (2) (ie. there is no diffraction).

## Description

### Technical Field

The invention relates to an autostereoscopic display. A autostereoscopic display is a device for displaying three-dimensional pictures without the need of additional equipment for the viewer, i.e. 3D-glasses such as anaglyphs, LCD-shutter glasses (LCD = Liquid Crystal Display), polarized glasses or prismatic glasses for example. In particular, the invention relates to head-up displays (HUD). A head-up display is any transparent display that presents data without requiring the user to look away from his or her usual viewpoint. Although they were initially developed for military aviation, HUDs are now used in commercial aircraft, automobiles, and other applications as well.

### Prior Art

DE 101 35 342 C1 discloses a projection device having a projection unit and a relatively spaced projection surface, e.g. incorporated in the automobile dashboard, onto which an image is projected using a light beam for each image point. The projection surface has a beam widening device in front of a mirror reflecting the incident light beams to provide reflected beams converging in a planar viewing field in front of the automobile driver.

DE 101 31 720 Al discloses a head-up display system for presentation of an object outside the vehicle to a person in the vehicle, comprising means for determination of the position of vehicle occupants and means for location corrected display of the object relative to the position.

Furthermore, US 5,198,895 A discloses a head-up display used in a cockpit with a space for the pilot having two subspaces where the pilot's eyes will be located during flight. The head-up display includes a video display device for emitting light representative of a predetermined image, located in the cockpit and a second video display for emitting light representative of the predetermined image located in the cockpit. An angularly selective holographic optic element diffraction grating is provided for reflecting light emitted from the first video display into the first subspace, but not into the second subspace. Light emitted from second video display device is reflected into the second subspace but not into the first subspace.

In addition, US 5,973,727 A discloses a refractive index modulator consisting of a liquid crystal layer, which is arranged near a glass plate so that the liquid crystal molecules are arranged to have a refractive index that is either less than or greater than that of the glass plate to produce either a total internal reflection of a beam at the glass plate or to transmit a light beam through the glass plate.

Furthermore, US 2004/0239835 A1 discloses a three-dimension display apparatus which includes a liquid crystal display, a first polarizer on the rear surface of the liquid crystal display, a second polarizer on the front surface of the liquid crystal display, a liquid crystal polymer being on the second polarizer and including a chiral dopant and liquid crystal molecules. The liquid crystal polymer is divided into first regions through which incident light is not polarized and second regions through which the incident light is polarized at 90 degrees. A third polarizer on the liquid crystal polymer selectively transmits the incident light from the liquid crystal polymer.

Finally, EP 1 739 978 A2 discloses a three dimensional display device including an image display unit, which unit includes pixels having first sub-pixels corresponding to a left-eye image and second sub-pixels corresponding to a right-eye image. The three dimensional display device also includes a parallax barrier which is located proximately to the image display unit. The parallax barrier includes light interception portions and light transmission portions alternately and repeatedly arranged in a direction and also color filters arranged between the light interception portions and the light transmission portions, wherein the color filters control paths of lights from the pixels.

### Object of the Invention

It is an object of the invention to provide an autostereoscopic display which is less complex and can be implemented with less technical effort. In particular, the object of the invention is to provide a head-up display which allows for a spatial impression.

### Summary of the Invention

The object of the invention is achieved by a display according to claim 1, that is an autostereoscopic display, comprising
- a pane which is partly reflective and partly transmissive and
- a light source for generation of an image consisting of a plurality of pixels, wherein for each pixel a left/right light beam is guided from the light source to the left/right eye of the viewer via said pane,
- wherein said guiding of the light beams to the eyes is achieved only by pure reflection at said pane.

Advantageously, the guiding of the light beams at the pane (particularly a windscreen) is achieved only by pure reflection. That does not mean that there may be no transmissive part, that is to say parts of the light beams which cross the pane and do not reach the viewer's eyes. It means that the part, which reaches the viewer, is just reflected at the pane and not diffracted as it is the case in some prior art solutions, which use a diffraction grating in the windscreen.

A diffraction grating is an optical component with a regular pattern, which splits (diffracts) light into several beams travelling in different directions. The directions of these beams depend on the spacing of the grating and the wavelength of the light so that the grating acts as a dispersive element.

As one can imagine, the use of such a grating, especially in a relatively large pane such as a windscreen which in addition often have complex shapes, requires complex machinery to produce the same. By contrast, the inventive display does not need additional diffractive means in the pane. Accordingly, such a display can be produced with less technical effort.

It is beneficial if the light beams are reflected at a surface being inclined in relation to the pane. For example, this embodiment can be used for cars, in which a light source is installed on the roof of the car which emits light beams to the viewer's eyes via the surface and the pane. Mounting the light source on the roof requires less space in the region of the dashboard of a car. Just the space for a reflecting surface, basically a small mirror, is needed there.

It is advantageous if the light source is designed as one out of the group: LED-display (Light Emitting Diode), LCD-display (Liquid Crystal Display) or OLED-display (Organic Light Emitting Diode). Such displays are easy available, reliable and low priced. They can be used for generation of pictures by definition. To provide a spatial impression of the picture, parallax barriers, which are known per se, have to be provided. Examples are micro lenses and transmissive slits separated by opaque barrier regions.

In an advantageous embodiment of the invention, the light source is designed as a single laser light source for both light beams. Lasers are suitable means for generating pictures as known from laser shows for example. In this embodiment, both eyes have to share one light source. This is cost saving but may lead to limitations in brightness of the image and the frame rate. The latter is particularly important for animated pictures or videos.

It is also advantageous if the light source is designed as one laser light source for each light beam. Here the left channel and the right channel are drawn by a left and a right laser. Using two lasers is more expensive but provides for brighter images and an increased frame rate. The latter is important for the generation of less 'nervous' pictures or videos.

In a further advantageous embodiment, the pixels are generated by modulation of a movable laser beam. Often so-called 'scanners' are used for the generation of laser based pictures. Scanners comprise two galvanometers, i.e. two mirrors perpendicular to each other and electromagnetically actuated. The first mirror deflects the laser beam in horizontal direction, and the second mirror deflects it in vertical direction. By blanking and mixing colors in combination with said deflection, single pixels on a surface can be illuminated in a desired color and a desired brightness. If just one laser or scanner is used, it generates the pictures for the left and the right eye semi-parallel, wherein the projection of the image may be achieved interlaced, i.e. drawing the odd lines for the left eye and the even lines for the right eye and then vice versa, or picture by picture, i.e. drawing the complete picture for the left and the right eye in an alternating manner. If two lasers or scanners are used, the images are generated fully parallel. Using two lasers provides for an increased frame rate and thus for generation of less 'nervous' pictures.

In yet another preferred embodiment of the invention, the pixels are generated by modulation of a reflection of a laser beam. Here a laser beam, which may also stand still, is modulated by a reflective surface comprising pixels, whose reflective factor can be influenced. An example are very small mirrors, each representing one pixel and being electrically actuated, which can deflect the assigned part of the light beam past the viewer's eye so that the pixels appears dark. This provides just for black and white images but also more sophisticated modulations are imaginable.

It is beneficial if the reflection modulation is done at the pane. In this embodiment, the reflection modulator is attached to or part of the pane. Here, the light source may directly shine on the pane respectively windscreen, but one has to take care that said means (e.g. usually thin foils) do not influence the viewers perception of the world outside the car.

Furthermore, it is advantageous if the reflection modulation is done at said inclined surface. Here the problem of influencing the viewers perception (even when the display is switched off) is circumvented as the reflection modulator is attached to or built into said surface. Usually, the reflection modulator is mounted on a car's dashboard in this embodiment.

Furthermore, it is advantageous if a LCD-matrix is provided as reflection modulator. Such matrices are easy available, reliable and low priced. Basically, an LCD-matrix is a LCD-display without backlight. By contrast, the light for illuminating the pixels is generated in front of the matrix and a mirror is arranged behind the matrix. By darkening a LCD-pixel as known per se, light is no longer reflected. By means of an LCD-matrix also grayscale images can be generated quite easily. In the case of laser light being used, dedicated parallax barriers may be omitted as the laser beams for the left and the right channel can be guided to the viewer's eyes with high precession. However, one has to take care that the laser beam is widened a bit so that not a singular light point reaches the viewer's eyes but a beam having the size of, let us say the size of spectacles glass. In this sense, virtual glasses may be provided.

Finally, the display comprises means for detecting a position of the viewer, means for determining a desired position for the left/right light beam according to said position of the viewer and, means for adapting the left/right light beam to said desired position in a preferred embodiment. It may happen that the driver considerably moves his head in the line of sight and/or in a plane perpendicular to said line of sight during driving a car. Another reason for changing eye-positions are different users using the car. If the eyes of the viewer move out of the associated projecting areas, then the projecting areas are adapted to the current eye-position of the user in this embodiment. In this way, the viewer can see the projected image in any position and keeps on his 'virtual glasses' in this sense.
These and other aspects of the invention are apparent from and will be elucidated with reference to the embodiments described and shown in the schematic Figures hereinafter.

### Brief Description of the Drawings

Figure 1 shows a first embodiment of the invention with an active display on a surface on a car's dashboard;
Figure 2 shows a second embodiment with a laser scanner projecting the image directly via the windscreen of a car;
Figure 3 shows a third embodiment with a laser scanner projecting an image via a surface on a car's dashboard;
Figure 4 shows a fourth embodiment with a reflection modulator in the windscreen of a car.

### Description of Embodiments

In the Figs. the same elements and elements with the same function are referenced with the same reference sign if not stated otherwise.

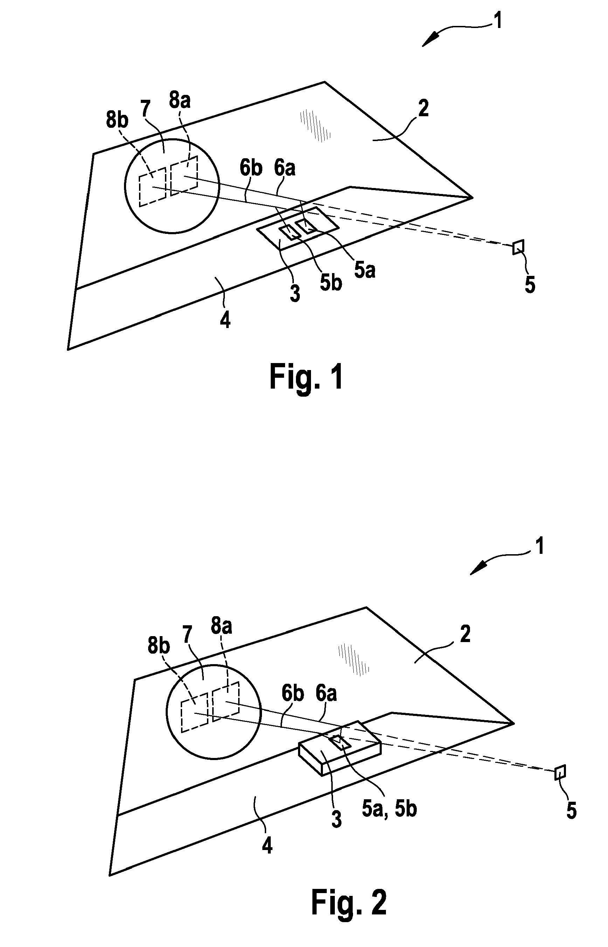

Fig. 1 depicts a first embodiment of the invention and shows an autostereoscopic display 1, comprising a pane 2, which is a windscreen of a car in this case, a light source 3 being arranged on a surface 4, which surface 4 is inclined in relation to the pane 2. For the sake of brevity just one pixel 5 of the light source 3 is shown, which pixel 5 consists of a left pixel 5a and a right pixel 5b. In addition, a left and a right light beam 6a and 6b is shown being emitted by the pixels 5a and 5b. Finally, Fig. 1 shows a driver's head 7.

The function of the display 1 as shown in Fig. 1 is as follows:

The left pixel 5a and the right pixel 5b are illuminated with a particular color and a particular brightness as the image to be projected requires. Thus, a left and a right light beam 6a and 6b are emitted, reflected at the pane 2 and finally reach the driver's head 7. The driver receives the left pixel 5a with the left eye and the right pixel 5b with right eye and thus gets the impression of a pixel 5 hovering in front or behind the pane 2. As can be seen, the angle of radiation for the beams 6a and 6b are chosen in such a way that the left and the right pixel 5a and 5b are visible in a particular left and right projecting areas 8a and 8b. Thus, small movements of the driver's head do not influence his spatial impression of the image. However, if he moves out of the target area, the spatial impression of the image is lost. This behavior of the light beams 6a and 6b can be seen as a provision of 'virtual glasses'.

The light source 3 may be an (active, meaning back lighted) LCD-display, a LED display or an OLED display. The way how pixels are activated is known per se for these devices and not explained any further. Said displays, however, need parallax barriers, which are known per se. Examples are micro lenses and transmissive slits separated by opaque barrier regions

Fig. 2 is quite similar to Fig. 1, the only difference is that the light source 3 is designed as a laser scanner. In this embodiment one single laser is used for the image generation, however, also two lasers can be used as the case may be. Furthermore, it is assumed that the images for the left and the right eye are sequentially generated, that means one by one. First, the laser generates the left light beam 6a and draws the image pixel by pixel and line by line quite similar as the cathode ray tubes do. After the left image has been completed, the laser generates the right light beam 6b and draws the right image in a similar way. Usually, 25 frames per second are chosen to project flowing pictures. Accordingly, the single laser should be capable of providing 50 frames per second so that flowing pictures for both the left and the right eye can be generated. If the contents of the pictures does not change very fast, also considerably lower frame rates may be applicable. An example is the speedometer which owing to the physics of a car cannot change very fast. As a laser beam can be guided or directed very precisely and as such may act as a parallax barrier, a further parallax barrier is not required. However, as laser light is so directional, means for widening the beams 6a and 6b a bit should be provided so that the pixels 5a and 5b are not just visible in a singular position of the driver's head but in a particular projecting area 8a and 8b as has been explained for the embodiment of Fig. 1 already. Additionally, a variable step width for the vertical scanning lines can compensate the double image introduced by a windscreen. According to prior art, a windscreen with 'wedged PVB' (Polyvinylbutyral) is used for this reason, which is a special windscreen providing for ghost-free automotive head-up displays. However, by employing variable step widths for the scanning lines also a 'normal' windscreen can be used.

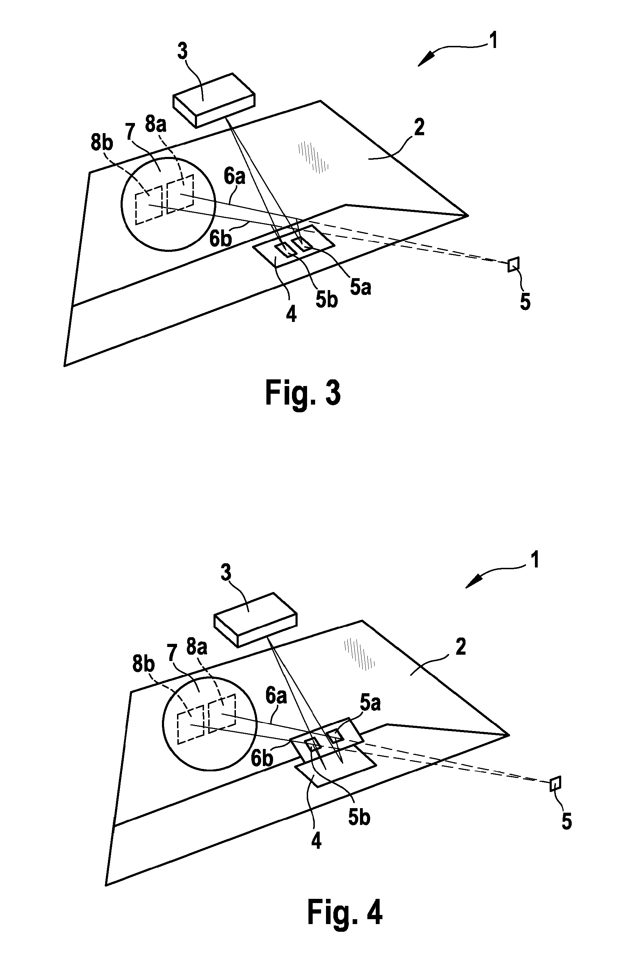

Fig. 3 shows a modification of the embodiment shown in Fig. 2. Here the light source 3, again a laser scanner, is arranged on the roof of the car and emits the light beams 6a and 6b downwards to a reflecting surface 4 arranged inclined to the pane 1. However, the principle is the same as the one of Fig. 2. There is just another reflecting plane. The reflecting surface 4 may be a simple mirror in this embodiment, why the pixels 5a and 5b have a rather symbolical meaning. This variant of the invention is advantageous if there is just limited space on the dashboard.

A next embodiment is a variation of the embodiments shown in the Figs. 1 and 3. Here again, a light source 3 is arranged on the roof of the car, but is a fixed laser source in this case. In addition, the surface 4 comprises a reflection modulator, e.g. a LCD-matrix which is arranged right above the reflective surface 4. In this example, a left and a right light beam 6a and 6b are emitted by two lasers and reach two separated areas on the reflecting surface 4. As known per se, the LCD-matrix provides for darkening dedicated pixels and thus for the generation of grayscale images. By contrast to the last examples, the pixels 5a and 5b are 'real' here. The light beams 6a and 6b, which are already modulated now, propagate to the pane 2 and are deflected to the viewer's eyes there as has already been explained hereinbefore. Alternatively, a single laser beam can be emitted by the light source 3 which is then separated in a left and a right light beam 6a and 6b at the reflective surface 4.

In a fourth embodiment as shown in Fig. 4, the reflection modulator, e.g. a LCD-matrix again, is arranged on or in the pane 2. In principle, this arrangement would also work without external light- provided the LCD-matrix comprises a parallax barrier - but to provide proper function also in twilight or during night, the matrix is again illuminated as has been explained hereinbefore. The light source 3, which may be a fixed laser again, can be arranged on the roof if there is a reflective surface 4 (e.g. a mirror) on the dashboard or directly on the dashboard. In case of illuminating the LCD matrix with a laser, a parallax barrier may be omitted, but if the LCD-matrix is illuminated by 'normal' light, it has to be provided with a parallax barrier.

As one can imagine, the 'virtual glasses', i.e. the projecting areas 8a and 8b, have to move with the driver's head 7. Otherwise it can happen that the left eye receives the image for the right eye whereas the right eye receives no image at all and vice versa. In a worst case the driver's head 7 completely moves out of the reception area, in other words the projecting areas 8a and 8b and his eyes do not coincide. Accordingly, means for detecting the position of the driver's head or his eyes are provided in a preferred embodiment. Several possibilities are imaginable. First of all, the position detection may be achieved by visual detection, i.e. by means of a camera, which can operate in the visible light spectrum or in the infrared spectrum. Here the algorithms for 'face detection', which have been incorporated in recent digital consumer cameras, can be used. Another possibility is to use a number of weight sensors in the driver's seat so as to detect the position of the center of gravity of his body. As the driver normally seats upright or slightly inclined, the position of the eyes can easily be determined. In this context it should also be mentioned, that the projecting areas 8a and 8b are not necessarily square-shaped but may also be in the form of narrow upright rectangles so that it does not matter if the driver moves his head in vertical direction. Finally, distance sensors may be used, e.g. ultrasonic distance sensors, passive infrared sensors and so on. As these sensors are known per se, they are not explained in detail here.

Detecting the position of the driver's head 7 or his eyes is one part of the story. Advantageously, the inventive autostereoscopic display 1 comprises also means to shift the 'virtual glasses', i.e. the projecting areas 8a and 8b according to the detected position. If narrow, sufficiently high and upright rectangular projecting areas 8a and 8b are provided, a shift in the horizontal direction may be sufficient to follow the driver's eyes. If the vertical dimension is limited, i.e. does not cover the full vertical range of the eye's positions, then also a vertical shift of the projecting areas 8a and 8b may be employed. In case of a laser scanner, shifting of the projecting areas 8a and 8b is relatively simple as the image in principle can be projected at any desired position. In case of an active pixel matrix or a reflection modulator is used, things are more complicated.

If a reflection modulator in combination with a laser beam is employed, both the beam and the position on the modulator, where the image is generated, have to move. If an active pixel matrix is used, the position of the image generation has to move as well. Alternatively or in addition, a parallax barrier may move so that the position, from where the right and the left image can be viewed, varies. If the parallax barrier is formed by device, which allows for easy change of a 'picture', such as a LCD-matrix, the parallax barrier can easily be adapted to the detected position of the drive's head 7. In case of just a horizontal shift is needed, vertical stripes, whose transmission rate can individually be controlled, are proper means to adapt the projecting areas 8a and 8b to the actual eye-position. However, besides electronic shifting of the parallax barrier also mechanical shifting is imaginable. Here a predetermined structure, i.e. a sequence of transmissive parts and non-transmissive parts, is moved by a motor, usually a linear motor. The movement may be based on electromagnetic or piezoelectric effects for example.

So far, just movements of the driver's head 7 in a plane more or less perpendicular to the line of sight have been discussed. However, though it is less frequent, the head 7 may also move in direction of the line of sight and thus reduce or increase the distance between the eyes and the imaging device. Hand in hand with this movement the angle between the light beams generating the projecting areas 8a and 8b has to be adapted. If the distance is increased, the angle is decreased and vice versa. In case of a laser beam is used, the direction of the beam can be varied as discussed above. If systems are used, which need a dedicated parallax barrier, the parallax barrier has to be varied according to the distance between imaging system and driver.

It should be noted that all steps which are taken to detect the position of the driver's head 7 and to move the projecting areas 8a and 8b to said detected position may be performed once, on demand, or ongoing for example. Quite often, cars are used by just one user, who rarely changes his position once he has found a comfortable position. In this case, it may be sufficient to run the adaptation sequence just initially, when the car is used first or on demand if, for example, a dedicated function is chosen. On the other hand, there are cars, whose users change very often, for example rental cars. In this case or if the driver is rather nervous and changes its position very often also during driving the car, a continuous adaptation of the projecting areas 8a and 8b might be useful.

It should also be noted that, cars and their drivers are subject to strongly varying light conditions, like night, bright sunlight and also front lights of opposing traffic. Without further measures the projected image can get badly visible or even invisible. Accordingly, measures are taken in a preferred embodiment to reduce or even avoid the influence of disturbing light sources and in particular stray light from these light sources. Proper means range from simple covers and black, matt coatings to block light from undesired directions over semi-reflective layers to electrochromic layers and light diffusers.

Said semi-reflective layers can increase the fraction of the light beams 6a and 6b, which is reflected, and at the same time increase the fraction of reflected light coming from outside the car. In this way the influence of disturbing light sources can substantially be decreased. Such layers can, for example, be arranged in the region, where the light beams 6a and 6b are reflected on the pane 2. A further possibility to reduce the influence of external light is to arrange electrochromic layers in said region. If disturbing light sources, e.g. blinding lights from opposing traffic, shine through said region, the layer is darkened by applying a voltage as it is known per se. In this way, the fraction of light which gets into the car can be dramatically decreased. It is understood that also the driver cannot look outside the pane in this region. However, it is better to keep, for example, a speedometer visible than blinding lights. In a preferred embodiment, the darkening effect gradually disappears in the border region so that no ugly, dark rectangular is produced on the pane 2. Yet another possibility is to arrange diffusers in the region where the light beams 6a and 6b are reflected on the pane 2. In this way, in particular the influence of dot-shaped light sources, e.g. again blinding lights, is decreased as they are 'blurred' over a particular region. It should be understood, that only a small number of possibilities for reducing the influence of disturbing light sources can be presented here. However, one skilled in the art will easily choose the best solution or combination of solutions out of the possibilities presented here and other possibilities, which are known per se, when he implements an inventive autostereoscopic display 1.

Furthermore, it should be noted that the invention does not apply to head-up displays for cars only. It also applies to head-up displays for vehicles in general and also to autostereoscopic displays in general, meaning also to stationary devices.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The verb 'comprise' and its conjugations do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. Autostereoscopic display (1), comprising
- a pane (2) which is partly reflective and partly transmissive and
- a light source (3) for generation of an image consisting of a plurality of pixels (5, 5a, 5b), wherein for each pixel (5, 5a, 5b) a left/right light beam (6a, 6b) is guided from the light source (3) to the left/right eye of the viewer via said pane (2),
- wherein said guiding of the light beams (6a, 6b) to the eyes is achieved only by pure reflection at said pane (2).

2. Display (1) according to claim 1, wherein the light beams (6a, 6b) are reflected at a surface (4) being inclined in relation to the pane (2).

3. Display (1) according to any one of the claims 1 or 2, wherein the light source (3) is designed as one out of the group: LED-display, LCD-display or OLED-display.

4. Display (1) according to any one of the claims 1 or 2, wherein the light source (3) is designed as a single laser light source for both light beams (6a, 6b).

5. Display (1) according to any one of the claims 1 or 2, wherein the light source (3) is designed as one laser light source for each light beam (6a, 6b).

6. Display (1) according to any one of the claims 4 or 5, wherein the pixels (5, 5a, 5b) are generated by modulation of a movable laser beam.

7. Display (1) according to any one of the claims 4 or 5, wherein the pixels (5, 5a, 5b) are generated by modulation of a reflection of a laser beam.

8. Display (1) according to claim 7, wherein the reflection modulation is done at the pane (2).

9. Display (1) according to the claims 2 and 7, wherein the reflection modulation is done at said inclined surface (4).

10. Display (1) according to any one of the claims 7 to 9, wherein a LCD-matrix is provided as reflection modulator.

11. Display (1) according to any one of the preceding claims, comprising means for detecting a position of the viewer, means for determining a desired position for the left/right light beam (6a, 6b) according to said position of the viewer and, means for adapting the left/right light beam (6a, 6b) to said desired position.
